# EUROPÄISCHE PATENTSCHRIFT

(11) **EP 0 378 608 B1**
(45) Veröffentlichungstag und Bekanntmachung des Hinweises auf die Patenterteilung: **13.01.1993**
(21) Anmeldenummer: 89906051.1
(22) Anmeldetag: 31.05.1989
(51) Int. Cl.: C01B 13/11

(54) **VORRICHTUNG ZUR ERZEUGUNG VON OZON**
DEVICE FOR PRODUCING OZONE
DISPOSITIF DE PRODUCTION D'OZONE

(30) Priorität: 03.06.1988 DE 3819304
(43) Veröffentlichungstag der Anmeldung: 25.07.1990
(73) Patentinhaber: WEDECO GESELLSCHAFT FÜR ENTKEIMUNGSANLAGEN MBH, D-32051 Herford (DE)
(72) Erfinder: LEITZKE, Ortwin, D-4044 Kaarst (DE)
(74) Vertreter: Thömen, Uwe, Dipl.-Ing.
(86) Internationale Anmeldenummer: DE8900367
(87) Internationale Veröffentlichungsnummer: WO8912021

(56) Entgegenhaltungen:
- EP-A-01 654 24

## Beschreibung

Die Erfindung betrifft eine Vorrichtung zur Erzeugung von Ozon gemäß dem Oberbegriff des Patentanspruchs 1.

Eine solche gattungsgemäße Vorrichtung ist durch das DE-PS 34 22 989 bekannt.

Ozon ist ein starkes Oxidationsmittel für organische Substanzen sowie für anorganische Verbindungen, die Elemente mit mehreren Oxidationsstufen enthalten. Von den vielfältigen Anwendungsgebieten für Ozon in der Chemie ist auch der Einsatz bei der Wasseraufbereitung zu erwähnen. In der Praxis sind die Anwendungsmöglichkeiten jedoch durch die hohen Investitions- und Betriebskosten für die Ozonerzeugung immer noch eingeschränkt.

Von den vielen Möglichkeiten, Ozon zu erzeugen, hat sich bisher nur die Ozonerzeugung durch stille elektrische Entladung als bedeutungsvoll durchsetzen können.

In diesem Zusammenhang sind zwei Ozonerzeugungstypen nach dem Prinzip der stillen elektrischen Entladung bekannt, nämlich Plattenozonerzeuger, bei denen die Elektroden aus parallelen Platten bestehen, und Rohrozonerzeuger, bei denen die Elektroden aus konzentrischen Rohren bestehen.

Die Erfindung befaßt sich mit dem letztgenannten Ozonerzeugertyp mit konzentrischen Rohren als Elektroden. Bei der durch die eingangs genannte DE-PS 34 22 989 bekannten Vorrichtung zur Erzeugung von Ozon sind als wesentliche Bestandteile zwei Elektroden vorgesehen, die durch ein Dielektrikum und einen Gasraum voneinander getrennt sind. An die Elektroden wird dabei Wechselstrom hoher Spannung angelegt. Gleichzeitig läßt man durch den Gasraum Sauerstoff oder Sauerstoffhaltiges Gas strömen, wobei dann zwischen den Elektroden eine elektrische Hochspannungsentladung ohne Funkenbildung und helle Lichterscheinung erfolgt. Diese Hochspannungsentladung führt zur gewünschten Ozonbildung.

Bei der durch die DE-PS 34 22 989 bekannten Vorrichtungen besteht die Innenelektrode aus mehreren massiven drahtartigen und zylindrischen Metallstäben, und außerdem ist das Verhältnis des Durchmessers der Außenelektrode zum Durchmesser der Innenelektrode größer als zwei gewählt.

Die Verwendung mehrerer zylindrischer Metallstäbe beruht dabei auf der Überlegung, daß mit den gegebenen relativ kleinen Radien der Metallstäbe eine größere Entladung wegen der umgekehrt zum Radius proportional anzutreffenden Feldstärke angestrebt wird. Um trotz der zylindrischen Metallstäbe mit kleinem Radius eine noch groß genug erscheinende Entladungsfläche zu erzielen, sind bei der bekannten Vorrichtung mehrere drahtartige Metallstäbe zur Bildung der Innenelektrode vorgesehen.

Wenngleich sich auf diese Weise auch Ozon erzeugen läßt, so haften der bekannten Vorrichtung doch einige Nachteile an. So muß hervorgehoben werden, daß die Handhabung bzw. der Aufbau der Innenelektrode durch Bildung einer Vielzahl von zylindrischen drahtartigen Metallstäben in der Praxis sehr aufwendig und umständlich ist.

Ein weiterer Nachteil besteht darin, daß die bekannte Innenelektrode insgesamt nur eine relativ geringe Entladungsfläche zur Verfügung stellen kann, weil bei der Vielzahl von aneinanderliegenden drahtartigen Metallstäben die dem Mittelpunkt zugewandten Oberflächen nicht in Betracht zu ziehen sind und sozusagen verloren gehen, und als Entladungsflächen nur die nach außen gerichteten Oberflächen wirksam sind. Diesem Mangel kann auch nicht dadurch abgeholfen werden, daß die Anzahl der drahtartigen Metallstäbe erhöht wird.

Wenn bei der bekannten Vorrichtung ferner das Verhältnis des Durchmessers der Außenelektrode zum Durchmesser der Innenelektrode größer als zwei sein soll, so ist dadurch ein relativ großer Mindestabstand zwischen den Elektroden vorgegeben. Je größer aber der Abstand zwischen den Elektroden ist, um so größer muß die für die stille Entladung benötigte Feldstärke bzw. die verwendete Spannung sein.

Der Erfindung liegt die Aufgabe zugrunde, eine Vorrichtung zur Erzeugung von Ozon zu schaffen, welche von den beschriebenen Nachteilen befreit ist, und die einen einfachen Aufbau sowie eine einfache Handhabung der Innenelektrode ermöglicht, wobei gleichzeitig die für die stille elektrische Entladung erforderlichen Feldstärken ohne zu große Spannungen erzielt werden. Dadurch soll als weitere Konsequenz der Wirkungsgrad erhöht bzw. der erforderliche Energieverbrauch erniedrigt werden.

Dieses Ziel erreicht die Erfindung bei der im Oberbegriff des Patentanspruchs 1 vorausgesetzten Vorrichtung durch die Merkmale des kennzeichnenden Teils des Anspruchs 1.

In neuartiger Weise wird für die Innenelektrode ein Metallstab verwendet, der als Mehrkantstab oder auch als Mehrkantrohr mit mehr als vier Längskanten, insbesondere als im Querschnitt regelmäßiges Sechseck, ausgebildet ist. Das Verhältnis des Durchmessers der Außenelektrode zum größten Durchmesser der Innenelektrode wird dabei im Gegensatz zu der bekannten Vorrichtung so gewählt, daß dieses Verhältnis nicht größer als zwei ist.

Wesentliche Parameter für einen Röhrenozonerzeuger nach dem Prinzip der stillen elektrischen Entladung mit Innenelektroden, Dielektrikum und Außenelektroden, welche die Effektivität der Vorrichtung bestimmen, sind die Gestalt und die Größe der Fläche der Innenelektroden, die angelegte elektrische Spannung, die Gestalt und die Größe des Entladungsraumes sowie die Gasverweilzeit im Entladungsraum.

Durch die Erfindung wird die Ozonproduktion pro Entladungsraum und die Energieausnutzung nun dadurch verbessert, daß über die ganze Länge der Metallinnenelektrode, die vorzugsweise als Sechskantstab ausgebildet ist, Kanten mit stumpfen Winkeln verlaufen. Diese Kanten bilden einen sehr kleinen Radius, so daß sich hohe Feldstärken ergeben, welche das Anlegen einer niedrigen elektrischen Spannung mit gleichförmiger Gasentladung ohne Sprüheffekte ermöglichen. Die zwischen den einzelnen Kanten sich erstreckenden Elektrodenflächen werden dabei in die Entladung mit einbezogen.

Eine gleichförmige Entladung mit hoher elektrischer Feldstärke aber niederer Spannung führt bei der Erfindung zu dem Vorteil, daß weniger Energiebedarf für die Ozonerzeugung benötigt wird. In diesem Zusammenhang ist auch das Merkmal zu sehen, wonach das Verhältnis des Durchmesser der Außenelektrode zum größten Durchmesser der Innenelektrode nicht größer als zwei ist. Dadurch ergibt sich ein kleiner Abstand bzw. kleiner Spalt zwischen den Elektroden, so daß wiederum höhere Feldstärken bei kleineren Spannungen möglich sind.

Wenn bei der Innenelektrode für den Mehrkantstab bzw. das Mehrkantrohr im übrigen Kanten mit stumpfen Winkeln verwendet werden, die einen kleinen Radius mit der Folge einer hohen Feldstärke an den Kanten bilden, so könnte man zwar daran denken, für die Kanten auch einen rechten Winkel oder sogar spitze Winkel zu verwenden, um noch höhere Feldstärken zu erzeugen. Allerdings besteht dann die Gefahr, daß die Kanten zum Sprühen neigen, was zu Verlusten führt und einer stillen elektrischen Entladung im Wege steht. Diese Gefahr ist bei den Kanten mit stumpfen Winkeln ausgeschlossen.

In einer zweckmäßigen Ausgestaltung der Erfindung verlaufen die Längskanten des Mehreckstabes nicht geradlinig, vielmehr sind sie um die Längsachse der Innenelektrode verdrallt bzw. verdreht.

Durch diese Ausgestaltung der Innenelektrode ergibt sich eine gewisse Verwirbelung der Luftströmung im Entladungsraum, und es hat sich gezeigt, daß dadurch eine noch bessere Entladung erreicht werden kann.

Weitere zweckmäßige Ausgestaltungen der Erfindung ergeben sich aus den Unteransprüchen, der Beschreibung und den Zeichnungen.

Nachfolgend wird die Erfindung anhand des in der Zeichnung dargestellten Ausführungsbeispiels näher erläutert.
Es zeigen:

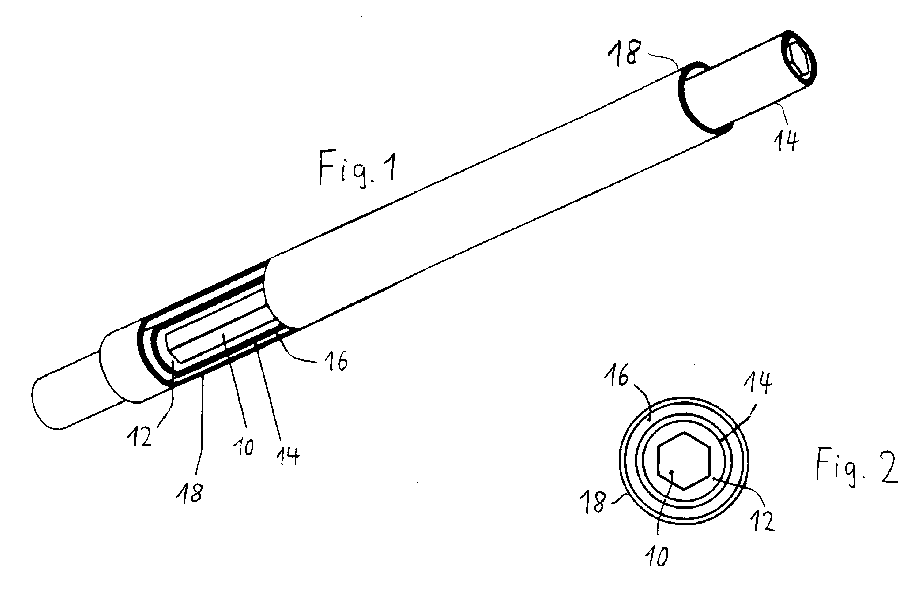

Fig. 1 eine perspektivische, teilweise geschnittene Ansicht einer Vorrichtung, und
Fig. 2 eine Querschnittsansicht der Vorrichtung.

Die dargestellte Vorrichtung zur Erzeugung von Ozon umfaßt eine Innenelektrode 10, die als Sechskantstab aus Metall ausgebildet ist. An die Innenelektrode 10 schließt sich ringförmig ein innerer Gasentladungsraum 12 an, der nach außen durch ein Dielektrikum 14 in Form eines Glasrohres begrenzt wird.

Auf das Dielektrikum 14 folgt ein äußerer ringförmiger Gasentladungsraum 16, an den sich eine Außenelektrode 18 anschließt. Die Außenelektrode 18 ist durch ein Metallrohr gebildet und wassergekühlt oder auch luftgekühlt ausgestaltet.

## Patentansprüche

1. Vorrichtung zur Erzeugung von Ozon aus sauerstoffhaltigen Gasen durch stille elektrische Entladung in einem von dem Gas durchströmten Zwischenraum, der von einer rohrförmigen Außenelektrode und einer von der Außenelektrode konzentrisch umgebenen spannungsführenden Innenelektrode gebildet ist, wobei zwischen der Innen- und der Außenelektrode ein Dielektrikum angeordnet ist, welches die Elektroden voneinander trennt, dadurch gekennzeichnet, daß die Innenelektrode (10) aus einem nach Art eines Vielecks ausgebildeten Mehrkantstab oder einem Mehrkantrohr von mehr als vier Längskanten besteht, und daß das Verhältnis des Durchmessers der Außenelektrode (18) zum größten Durchmesser der Innenelektrode (10) nicht größer als zwei ist.

2. Vorrichtung nach Anspruch 1, dadurch gekennzeichnet, daß die von den Seiten des Vielecks des Querschnitts der Innenelektrode (10) gebildeten Innenwinkel 120° betragen und ein regelmäßiges Sechseck bilden.

3. Vorrichtung nach Anspruch 1 und/oder 2, dadurch gekennzeichnet, daß die Längskanten des Mehrkantstabes oder Mehrkantrohres (10) nicht geradlinig verlaufen, sondern um die Längsachse der Innenelektrode verdrallt bzw. verdreht sind.

## Claims

1. Device for generating ozone from oxygen-containing gases by electrical corona discharge in an intermediate space traversed by the gas, which is formed by a tubular outer electrode and a voltage-conducting inner electrode, concentrically surrounded by the outer electrode, a dielectric which separates the electrodes from each other being disposed between the inner and outer electrodes, characterized in that the inner electrode (10) consists of a polyhedral bar having a polygonal cross-section or of a polyhedral tube having more than four longitudinal edges, and in that the ratio of the diameter of the outer electrode (18) to the maximum diameter of the inner electrode (10) is not greater than two.

2. Device according to Claim 1, characterized in that the internal angles formed by the sides of the polygon of the cross-section of the inner electrode (10) are 120° and form a regular hexagon.

3. Device according to Claim 1 and/or 2, characterized in that the longitudinal edges of the polyhedral bar or polyhedral tube (10) are not rectilinear, but are twisted. about the longitudinal axis of the inner electrode.

## Revendications

1. Dispositif de production d'ozone à partir de gaz oxygéné par décharge électrique silencieuse dans une chambre intermédiaire parcourue par le gaz et qui est formée par une électrode externe tubulaire et une électrode interne sous tension entourée d'une manière concentrique par l'électrode externe, un diélectrique étant disposé entre les électrodes interne et externe, lediélectrique séparant les électrodes l'une de l'autre, caractérisé en ce que l'électrode interne (10) consiste en une barre formée à la manière d'un polygone ou un tube ayant plus de quatre arêtes longitudinales, et en ce que le rapport du diamètre de l'électrode externe (18) et du diamètre maximal de l'électrode interne (10) ne soit pas supérieur à deux.

2. Dispositif suivant la revendication 1, caractérisé en ce que les angles intérieurs créés par les côtés du polygone de la section de l'électrode interne (10) font 120° et forment un hexagone régulier.

3. Dispositif suivant la revendication 1 et/ou 2, caractérisé en ce que les arêtes longitudinales de la barre polygonale ou du tube polygonale (10) ne sont pas linéaires mais torsadées ou enroulées respectivement autour de l'axe longitudinal de l'électrode interne.
